Europäisches Patentamt

European Patent Office

Office européen des brevets

(19)

(11) Numéro de publication: **0 039 644 B1**

(12) # FASCICULE DE BREVET EUROPEEN

(45) Date de publication du fascicule du brevet: **14.03.84**

(51) Int. Cl.³: **F 16 D 41/07, F 04 D 13/02**

(21) Numéro de dépôt: **81400704.3**

(22) Date de dépôt: **05.05.81**

(54) Dispositif d'anti-dévirage pour arbre de pompe.

(30) Priorité: **06.05.80 FR 8010032**

(43) Date de publication de la demande: **11.11.81 Bulletin 81/45**

(45) Mention de la délivrance du brevet: **14.03.84 Bulletin 84/11**

(84) Etats contractants désignés: **BE CH DE GB LI**

(56) Documents cités:
**FR - A - 1 320 599**
**FR - A - 1 446 255**
**FR - A - 2 290 605**
**GB - A - 951 010**

(73) Titulaire: **JEUMONT-SCHNEIDER Société anonyme dite:, 31-32, Quai de Dion Bouton, F-92811 Puteaux Cedex (FR)**

(72) Inventeur: **Falbierski, Jean-Jacques, 8, Allée du Coucou, F-59460 Jeumont (FR)**

(74) Mandataire: **Lejet, Christian et al, Société JEUMONT-SCHNEIDER 31-32, Quai de Dion Bouton, F-92811 Puteaux Cedex (FR)**

BUNDESDRUCKEREI BERLIN

Dispositif d'anti-dévirage pour arbre de pompe

La présente invention concerne les dispositifs d'anti-dévirage pour arbre de pompe et, plus précisément, les dispositifs comprenant un galet asymétrique pivotant autour d'un axe fixe et un moyen élastique engendrant une force de rappel tendant à appliquer le galet contre la périphérie de l'arbre de la pompe.

On sait que, dans les dispositifs d'anti-dévirage de ce type, la force de rappel crée une réaction d'appui entre l'axe fixe et le centre de l'arbre de telle manière qu'en cas de rotation en sens inverse de l'arbre, il y ait un effet d'abord de freinage important puis de coincement du galet contre l'arbre tandis qu'eu cas de rotation normale de l'arbre, seule une légère force de frottement du galet contre la périphérie de l'arbre subsiste.

Cette dernière force est toutefois génératrice d'usure des pièces.

La présente invention a pour but d'obvier à cet inconvénient.

Le brevet français FR-A-1 320 599 décrit un accouplement à roue libre entre les parties intérieure et extérieure duquel sont disposés des corps bloquants maintenus en position basculée par des ressorts. En fonctionnement normal, le courant d'huile dévié dans le sens de rotation de la partie extérieure en mouvement, exerce sur les corps bloquants une force qui fait basculer ces derniers à l'encontre de l'action des ressorts. Selon ce brevet, la partie extérieure se déplace en même temps que la totalité des corps bloquants qui entraine le fluide alors qu'il est souhaitable de réaliser un dispositif dans lequel la partie extérieure est fixe, le fluide se deplaçant en même temps que l'arbre.

Pour atteindre ce but, selon l'invention, le dispositif d'anti-dévirage, qui comprend un galet asymétrique pivotant autour d'un axe fixe et un moyen élastique engendrant une force de rappel tendant à appliquer ledit galet contre la périphérie de l'arbre de la pompe, est caractérisé en ce qu'un moment par rapport audit axe fixe dudit galet est engendré par le fluide pompé en mouvement, par l'intermédiaire d'une ailette qui est solidaire dudit galet et qui présente une surface utile sensiblement perpendiculaire à la direction du fluide pompé.

De ce fait, lors de la rotation normale de l'arbre de la pompe, le galet s'écarte totalement de la périphérie de ce dernier, d'où il résulte l'élimination de toute force de frottement entre les pièces, tandis qu'à arrêt comme au dévirage, le galet prend appui sur la périphérie de l'arbre et fonctionne comme tout dispositif d'anti-dévirage.

L'invention sera mieux comprise et d'autres buts, avantages et caractéristiques de cele-ci apparaitront plus clairement à la lecture de la description qui suit d'un mode de réalisation donné à titre non limitatif, description à laquelle une planche de dessin est annexée.

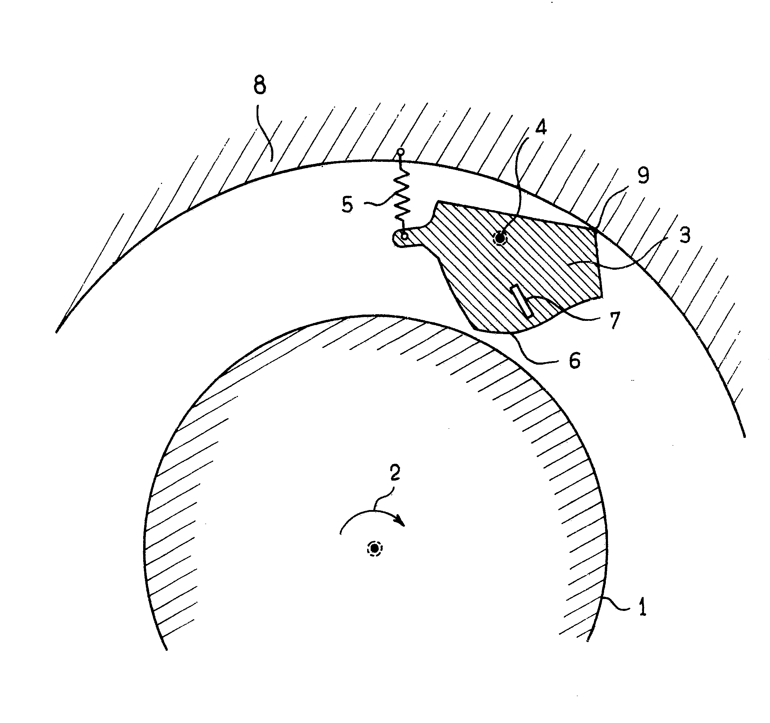

La figure unique représente, en coupe transversale par rapport à l'arbre de la pompe, un dispositif d'anti-dévirage conforme à la présente invention.

En référence à cette figure unique maintenant, l'arbre de la pompe 1 est prévu pour avoir le sens de rotation normal indiqué par la flèche 2. Le fluide pompé est imprimé d'un mouvement centrifuge.

Le dispositif d'anti-dévirage comprend un galet 3 asymétrique pivotant autour de son axe fixe 4. Un moyen élastique 5 est prévu pour engendrer une force de rappel tendant à appliquer la partie 6 du galet contre le périphérie de l'arbre 1.

En outre, conformément à l'invention, une ailette 7 est solidaire du galet 3.

Cette ailette 7 est disposée sensiblement perpendiculairement au mouvement du fluide pompé de telle manière que se dernier applique une force sur cette ailette 7.

La position précise de cette ailette 7 est déterminée en fonction de sa surface utile et du débit du fluide pompé pour que le moment de la force qui lui est appliqué par rapport à son axe fixe 4 soit légèrement supérieur au moment de la force de rappel par rapport au même axe 4 et de sens opposé. De ce fait, en fonctionnement normal de la pompe, l'arbre tourne dans le sens de la flèche 2.

Le fluide exerce une force appropriée sur l'ailette 7 et le galet vient s'appuyer, par sa partie 9, contre le bâti fixe 8. Il en résulte qu'aucune force de frottement n'est engendrée par le galet 3 sur la périphérie de l'arbre 1 et, par suite, aucune usure des pièces.

En fonctionnement anormal, c'est-à-dire lors d'un dévirage, le fluide n'exerce aucune force contre l'ailette 7 et le galet 3 vient frotter contre la périphérie de l'arbre puis coincer l'arbre lui-même comme tout dispositif d'anti-dévirage.

En outre, lors d'un arrêt de la pompe, le galet 3 vient interdire tout mouvement intempestif de l'arbre 1.

**Revendication**

Dispositif d'anti-dévirage pour arbre de pompe, ledit dispositif comprenant un galet asymétrique (3) pivotant autour d'un axe fixe (4) et un moyen élastique (5) engendrant une force de rappel tendant à appliquer ledit galet contre la périphérie du dit arbre, caractérisé en ce qu'un moment par rapport au dit axe fixe (4) du dit galet (3) est engendré par le fluide pompé en mouvement, par l'intermédiaire d'une ailette (7) qui est solidaire du dit galet (3) et qui présente une surface utile sensiblement perpendiculaire à la direction du fluide pompé.

**Patentanspruch**

Rücklaufsperre für eine Pumpenwelle mit einem um eine feststehende Achse (4) drehbaren asymmetrischen Sperrdaumen (3) und mit einer Federvorrichtung (5), die eine Rückstellkraft erzeugt, die den Sperrdaumen an den Umfang der Pumpenwelle anzulegen versucht, dadurch gekennzeichnet, daß ein Moment um die feststehende Achse (4) des Sperrdaumens (3) von dem in Bewegung gepumpten Strömungsmittels mittels eines Flügels (7) erzeugt ist, der mit dem Sperrdaumen (3) fest verbunden ist, und der eine im wesentlichen senkrecht zur Richtung des gepumpten Strömungsmittels verlaufende Nutzfläche aufweist.

**Claim**

Return prevention device for pump shaft, said device comprising a non-symmetrical roller (3) pivotable about a fixed axis 4 and an elastic means (5) producing a restoring force tending to apply the said roller against the periphery of the said shaft, characterised in that a moment relatively to the said fixed axle (4) of the said roller (3) is produced by the moving pumped fluid by means of a vane (7) which is solid with the said roller (3) and which has a useful surface substantially perpendicular to the direction of the pumped fluid.